Europäisches Patentamt

European Patent Office

Office européen des brevets

(11) Veröffentlichungsnummer: **0 040 298**
**A1**

(12) # EUROPÄISCHE PATENTANMELDUNG

(21) Anmeldenummer: 81101692.2

(22) Anmeldetag: 09.03.81

(51) Int. Cl.³: **B 29 D 7/14**
**C 08 J 5/18**

(30) Priorität: 18.04.80 AT 2124/80
08.07.80 AT 3564/80

(43) Veröffentlichungstag der Anmeldung:
25.11.81 Patentblatt 81/47

(84) Benannte Vertragsstaaten:
AT BE CH DE FR GB IT LI NL SE

(71) Anmelder: CHEMIE LINZ AKTIENGESELLSCHAFT
St. Peter-Strasse 25
A-4020 Linz(AT)

(71) Anmelder: Renolit-Werke Gesellschaft mit
beschränkter Haftung
Postfach 914 Horchheimer Strasse 50
D-6520 Worms am Rhein(DE)

(72) Erfinder: Altendorfer, Florian, Dipl.-Ing.
Nöstlbach 77
A-4502 St. Marien(AT)

(72) Erfinder: Hagn, Hermann, Ing. grad.
Kopernikusstrasse 20
D-8264 Waldkraiburg(DE)

(72) Erfinder: Stautner, Hans, Ing. grad.
Landschaftsweg 13
D-8090 Wasserburg(DE)

(54) Verfahren zur Herstellung von Folien oder Platten aus Polypropylen oder dessen Mischungen mit Polyäthylen.

(57) Verfahren zur Herstellung von Folien oder Platten aus Polypropylen oder dessen Mischungen mit Polyäthylen durch Kalandrieren bei Temperaturen oberhalb des Kristallitschmelzpunktes, wobei von einem Polypropylen oder Polypropylen-Polyäthylengemisch mit einem Schmelzindex im Bereich von 0,4 bis 2,0 g/10 min (230°C/21,6 N) ausgegangen wird und dieses Material so stabilisiert ist, daß der Schmelzindex während des Verfahrens nicht über 2,4 g/10 min (230°C/21,6 N) ansteigt. Bevorzugt wird das Material so stabilisiert, daß die Schmelzindexerhöhung während des Kalandrierens maximal 20 % des Ausgangsschmelzindex beträgt.

/

EP 0 040 298 A1

Verfahren zur Herstellung von
Folien oder Platten aus Polypropylen
oder dessen Mischungen mit Polyäthylen

Die vorliegende Erfindung betrifft ein Verfahren zur Herstellung von Folien oder Platten aus vorwiegend isotaktischem, gegebenenfalls mit Füllstoffen versehenen Polypropylen oder Mischungen von Polypropylen mit maximal 25 % Polyäthylen durch Kalandrieren, wobei glasklare oder opake Folien erhalten werden.

Folien oder Platten aus vorwiegend isotaktischem Polypropylen werden in überwiegendem Maße unter Anwendung von Extrusionsverfahren hergestellt. Hingegen hat sich die Herstellung von Folien auf dem Kalander, die für andere Kunststoffe, wie PVC, große Bedeutung hat, bei Polypropylen bisher in der Praxis nicht durchgesetzt.

Aus der AT-PS 211 040 ist zwar bekannt, daß man aus Polyolefinen unter Benützung eines Kalanders dann Folien oder Platten erhalten kann, wenn man die Oberflächen sämtlicher Kalanderwalzen auf einer Temperatur oberhalb des Kristallitschmelzpunktes hält, jede nachfolgende Kalanderwalze gegenüber der vorhergehenden mindestens im Verhältnis 1,1 : 1 voreilen läßt und die Arbeitsbedingungen am Kalander so abstimmt, daß die vor den Walzenspalten sich bildenden Knetkörper in sich rotieren. Dieses Verfahren ist in erster Linie für Polyäthylen bestimmt, wobei offensichtlich Probleme auftraten, da Abzugswalzen mit Gummibelag empfohlen wurden. Will man jedoch Polypropylen nach dieser Methode verarbeiten, besteht die Schwierigkeit, daß bei Verwendung der für die Folienherstellung üblichen Typen mit einem Schmelzindex von 5 g/10 min und höher gemessen bei 230°C/21,6 N, die für den Kalander üblichen Verarbeitungstemperaturen von rund 210°C erlauben, der Kunststoff an den Walzen kleben bleibt.

Überraschenderweise konnte nun gefunden werden, daß es doch möglich ist, transparente und opake Folien oder Platten aus Polypropylen oder dessen Mischungen mit Polyäthylen mit überwiegendem Polypropylenanteil am Kalander zu erzeugen, die eine glatte Oberfläche besitzen, ohne daß das Material an den Walzen klebt, wenn man während des Kalandrierverfahrens innerhalb eines ganz eng begrenzten Schmelzindexbereiches bleibt. Das heißt, daß von einem Polypropylen, dessen Schmelzindex innerhalb eines bestimmten Bereiches liegt, ausgegangen wird, und daß ferner verhindert werden muß, daß der Schmelzindex durch Abbau während der Verarbeitung zu stark erhöht wird.

Gegenstand der vorliegenden Erfindung ist demnach ein Verfahren zur Herstellung von Folien oder Platten aus Polypropylen oder dessen Mischungen mit Polyäthylen durch Kalandrieren bei Temperaturen oberhalb des Kristallitschmelzpunktes und bei einer Voreilung jeder nachfolgenden Kalanderwalze von mindestens 1,1 : 1, das dadurch gekennzeichnet ist, daß ein gegebenenfalls inerte Füllstoffe und/oder inerte Pigmente enthaltendes Polypropylen oder ein Gemisch desselben mit maximal 25 Gew.% Polyäthylen mit einem Schmelzindex im Bereich von 0,4 bis 2,0 g/10 Minuten (230°C/21,6 N) eingesetzt wird, und für eine Stabilisierung des Polypropylens oder Polypropylen-Polyäthylengemisches in solchem Maße gesorgt ist, daß während des Kalandrierverfahrens der Schmelzindex nicht über 2,4 g/10 Minuten (230°C/21,6 N) ansteigt.

Polypropylen, dessen Schmelzindex dem erfindungsgemäßen Wert von 0,4 bis 2,0 g/10 Minuten entspricht, kann einfach durch entsprechende Führung der Polymerisation im Reaktor erzeugt werden. Hat man aber ein Reaktorprodukt dieses speziellen Bereiches nicht zur Verfügung, so ist es ebenso gut auch möglich, dieses Material mit dem erfindungsgemäßen Schmelzindex durch Mischung zweier Polypropylentypen von verschiedenem Schmelzindex zu erzeugen. So kommt man bevorzugt zu einem für das erfindungsgemäße Verfahren sehr gut geeigneten Produkt, wenn man 70 bis 95 Gew.% eines hochmolekularen Polypropylens, dessen Schmelzindex im Bereich von 0,2 bis 0,5 g/10 Minuten (230°C/21,6 N) liegt mit 5 bis 30 Gew.% eines niedermolekularen Polypropylens mit einem Schmelzindex von höher als 7 g/10 Minuten (230°C/ 21,6 N) mischt.

Dieser Befund ist äußerst überraschend, denn ein Fachmann mußte erwarten, daß die dadurch eingebrachten niedermolekularen Anteile dazu Anlaß geben, daß das Produkt dann auch das nachteilige Kleben an den Walzen zeigt. Dies ist aber nicht der Fall, im Gegenteil, es ist sogar möglich, Polypropylene mit einem Schmelzindex von höher als 10, ja sogar von 25 bis 35 g/10 Minuten als Mischungspartner einzusetzen, wobei lediglich darauf zu achten ist, daß die Mengen innerhalb der angegebenen Bereiche so gewählt werden, daß der erfindungsgemäße Bereich von 0,4 bis 2,0 g/10 Minuten tatsächlich eingehalten wird.

Der erfindungsgemäße Schmelzindexbereich des für die Verarbeitung am Kalander eingesetzten Polypropylens kann aber nicht nur durch Zumischen von Polypropylen eines höheren Schmelzindex zu hochmolekularem Polypropylen erzeugt werden, sondern auch durch Zumischen von Polyäthylen, beispielsweise eines solchen eines Schmelzindex von höher als 1,0 g/10 min (190°C/21,6 N) eingestellt werden. Auch diese so erhaltene Mischung ist gut für das Kalandrierverfahren geeignet, soferne die geforderte Regel hinsichtlich des Schmelzindex der Mischung eingehalten wird und der Polyäthylenanteil in der Mischung 25 Gew.% nicht übersteigt. Als Mischungspartner ist sowohl Hochdruckpolyäthylen als auch Niederdruckpolyäthylen geeignet.

Als besonders günstig hat es sich erwiesen, wenn man während des Kalandrierverfahrens innerhalb eines eng begrenzten Schmelzindexbereiches bleibt und das zu verarbeitende Material in einer Weise stabilisiert, daß während des Kalandrierverfahrens, das naturgemäß eine wesentliche und länger andauernde thermische Belastung mit sich bringt, praktisch keine Erhöhung des Schmelzindex des zu verarbeitenden Polymeren eintritt. Das ist nur dann möglich, wenn ein Stabilisator eingesetzt wird, der hinsichtlich Flüchtigkeit ganz bestimmten Anforderungen genügt. Diese sind dann erfüllt, wenn das Ausgangsmaterial mit einem Thermostabilisator versehen ist, der bei Aufheizen auf 250°C bei einer Aufheizgeschwindigkeit von 6°C/Minute in $N_2$-Atmosphäre maximal 5 Gew.% Abdampfverlust aufweist und die Menge des Stabilisators so bemessen ist, daß während des Kalanderverfahrens die Schmelzindexerhöhung maximal 20 % des Ausgangsschmelzindex beträgt.

Es hat sich vor allem bei der großtechnischen Durchführung der Kalandrierung von Polypropylen gezeigt, daß eine klaglose Folienherstellung auch in größerem Maßstab und über längere Produktionsperioden vor allem dann klaglos verläuft, wenn ein Abbau des zu verarbeitenden Polypropylens praktisch vermieden wird. Tritt einmal eine nennenswerte Degradierung des Materials durch die thermische Belastung am Kalander ein, ist diese offensichtlich nicht mehr richtig steuerbar, sodaß ein Kleben des Materials auf den Walzen die Folge ist. Dieser Effekt tritt auf, ganz gleichgültig, ob man sich im oberen oder im unteren Bereich der erfindungsgemäß angegebenen Schmelzindexgrenzen befindet, sodaß auch dann, wenn ein Material mit niedrigem Schmelzindex, z.B. im Bereich von 0,4 bis 1 eingesetzt wird, ein nennenswerter Abbau tunlichst zu vermeiden ist. Natürlich kommt ein ev. einsetzender Abbau noch mehr zum Tragen, wenn das Polymere im oberen Bereich des erfindungsgemäßen Schmelzindex gelegen ist, da hier ein noch ungünstigeres Verhältnis zwischen Rückhaltekraft an den Walzen und Viskosität der Schmelze gegeben ist. Eine Erhöhung über die angegebene Schmelzindexobergrenze hinaus führt zu Schmelzen, die so dünnflüssig sind, daß ein klagloses Abziehen der Folie von den Walzen kaum mehr möglich ist bzw. häufige Störungen die Folge sind.

Besonders günstige Arbeitsbedingungen werden dann erhalten, wenn ein Thermostabilisator eingesetzt wird, bei dem ein Abdampfverlust von 5 % erst bei Aufheizen auf Temperaturen über 270°C zu verzeichnen ist. Die Bestimmung des Abdampfverlustes erfolgt hierbei auf thermogravimetrischem Wege. Es werden dazu 40 - 50 mg des Stabilisators unter $N_2$-Atmosphäre (5 l/Stunde) mit einer Geschwindigkeit von 6°C/Minute linear aufgeheizt, wobei festgestellt wird, bei welcher Temperatur der Abdampfverlust von 5 % eingetreten ist. Anhand dieser Bestimmungen ist es auf einfache Weise möglich, unter den handelsüblichen Stabilisatoren jene auszuwählen, die den erfindungsgemäßen Anforderungen hinsichtlich Flüchtigkeit entsprechen. Als Beispiel für Thermostabilisatoren, die den Anforderungen gemäß vorliegender Erfindung genügen,
können die Substanzen Tetrakis-2,4-ditert.butylphenyl-4,4'-biphenylylen-di-
phosphonit mit einer 5 %-Grenze bei 296°C, Distearylpentaerithritoldiphosphit mit einer 5 %-Grenze bei 251°C, Sorbit-tris-phosphit-distearyl-mono-
$C_{30}$ -diolester mit einer 5 %-Grenze von 273°C und Tris-(2,4-ditert.-butylphe-
nyl)-phosphit mit einer 5%-Grenze von 268°C genannt werden.

Das für das Kalandrierverfahren eingesetzte Polypropylen oder Polypropylen-
Polyäthylengemisch kann auch inerte Füllstoffe wie Graphit, Talkum oder
Kreide und/oder übliche inerte Pigmente bzw. Nukleationsmittel wie z.B. Al-
Dibenzoat enthalten, soferne ein entsprechendes Aussehen der Folien oder
entsprechende Eigenschaften erwünscht sind. Überraschenderweise hat sich
gezeigt, daß ein gewisser Pigmentgehalt, vorzugsweise 1 bis 3 Gew.%,
insbesondere ein solcher an $TiO_2$, die Verarbeitbarkeit des Polymeren am
Kalander begünstigt.

Für die Durchführung des Kalandrierverfahrens ist es nur wesentlich, daß die
Oberflächentemperatur der Walzen über dem Kristallitschmelzpunkt liegt. Sie
kann an sich relativ niedrig, z.B. um 210°C, gehalten werden, wobei sich eine
leicht ansteigende Tendenz der Walzentemperaturen in Arbeitsrichtung als
zweckmäßig herausgestellt hat. Diese niedrige Verarbeitungstemperatur hat
den Vorteil, daß die üblichen, für PVC eingesetzten Kalander auch für die
Durchführung des erfindungsgemäßen Verfahrens verwendet werden können.
Natürlich können auch höhere Temperaturen, z.B. 225°C und mehr, angewendet werden, wenn entsprechend heizbare Einrichtungen vorhanden sind. Je
höher die Temperatur ist, desto mehr Augenmerk muß auf mögliche Abbaureaktionen gelegt werden.

Brauchbare Kalander können 3 und mehr Walzen besitzen, unabhängig von der
Walzenanordnung. Sie können also z.B. in der sog. I,L,F oder Z-Form angeordnet sein. Die Walzen untereinander müssen in Arbeitsrichtung gesehen, eine
gewisse Voreilung besitzen, die von Walze zu Walze mindestens 1,1 zu 1
beträgt. Bei der Verarbeitung treten, wie schon bekannt, Knetkörper auf, die
in sich rotieren.

Mit dieser Verfahrensweise können nichtverstreckte Folien hergestellt werden. Sollen die Folien im thermoplastischen Bereich verstreckt werden, empfiehlt es sich, diese Maßnahme mit dem Kalandrierverfahren zu kombinieren, indem man die Geschwindigkeit der Abzugswalzen erhöht. Die Abzugswalzen können die für Kalander übliche Beschaffenheit aufweisen. Ein Gummibelag zum Verhindern des Klebens ist im Gegensatz zur Lehre der AT-PS 211 040 nicht erforderlich. Die Eigenschaften der so erhaltenen Folien können durch entsprechende Nachbehandlung, wie langsame oder auch schockartige Abkühlung, z.B. mittels Kühlwalzen, oder auch durch Tempern in üblicher Weise variiert werden. Die dazu nötigen Einrichtungen lassen sich auf einfache und damit wirtschaftliche Weise mit dem Kalander verbinden.

Die Stärke der Folien kann stark variieren. Es können damit sowohl Verpackungsfolien, z.B. solche einer Stärke von 40 bis 200 µm erzeugt werden, als auch solche, die als Ausgangsmaterial zum Tiefziehen geeignet sind. Solche Folien können eine Stärke von 200 bis 1000 µm besitzen. Die Transparenz der Folien nimmt in an sich bekannter Weise mit der Abkühlgeschwindigkeit nach der letzten Walze zu.

Das erfindungsgemäße Verfahren soll in den nachfolgenden Beispielen näher erläutert werden. Die darin angegebenen Werte für den Schmelzindex sind alle bei 230°C und 21,6 N gemessen worden.

**Beispiel 1:**

Aus 75 Gew.% eines Polypropylens mit einem Schmelzindex von 0,3 g/10 Minuten und 25 Gew.% eines Polypropylens mit einem Schmelzindex von 8 g/10 Minuten wird unter Zusatz von 0,4 Gew.% 2,6-Di-tert.butyl-4-methylphenol (BHT) eine Mischung hergestellt, die einen Schmelzindex von 0,8 g/10 Minuten besitzt. Dieses Produkt wird auf einem aus 4 in der L-Form angeordneten Walzen bestehenden Kalander mit 2 m Arbeitsbreite zu einer Folie von 100 /um Stärke verarbeitet, wobei die Walzen in Arbeitsrichtung an der Walzenoberfläche auf Temperaturen von 205/208/208/208°C gehalten werden. Die Voreilung der nächstfolgenden Walze beträgt jeweils 1,1 : 1. Die dabei erhaltene Folie zeigt eine beidseitig glatte Oberfläche. Das Polypropylen besitzt in der Folie einen Schmelzindex von 1,7 g/10 Minuten.

**Beispiel 2:**

Direkt aus dem Reaktor stammendes Polypropylen, das einen Schmelzindex von 1,0 g/10 Minuten besitzt und mit 0,1 Gew.% eines Phosphitstabilisators stabilisiert ist, wird auf dem in Beispiel 1 beschriebenen Kalander, bei dem die Walzen auf einer Oberflächentemperatur von 200/205/215/225°C gehalten werden, unter gleichzeitiger Verstreckung von 1 : 4 zu einer 80 /um starken Folie verarbeitet. Die Produktionsgeschwindigkeit am Kalander beträgt dabei 20 m/Minute, die Folie wird von der letzten Walze mit einer Geschwindigkeit von 80 m/Minute abgezogen. Das Polypropylen in der beidseitig glatten, verstreckten Folie besitzt einen Schmelzindex von 1,2 g/10 min.

**Beispiel 3:**

Ein Polypropylen mit einem Schmelzindex von 0,6 g/10 Minuten, das 0,2 Gew.% eines Phosphit-Stabilisators enthält, erhalten durch Mischen von 95 Gew.% Polypropylen eines Schmelzindex von 0,3 g/10 Minuten und 5 Gew.% eines Polypropylens mit einem Schmelzindex von 20 g/10 Minuten wird wie in Beispiel 1 beschrieben zu einer Folie einer Stärke von 400 /um verarbeitet. Das Polypropylen der Folie besitzt einen Schmelzindex von 0,7 g/10 min.

Beispiel 4:

Polypropylen mit einem Schmelzindex von 1,3 g/10 Minuten, das durch Zusatz von 0,05 Gew.% eines Phosphit-Stabilisators stabilisiert ist, und das durch Mischen von 70 Gew.% eines Polypropylens eines Schmelzindex von 0,5 g/10 - Minuten mit 30 Gew.% eines Polypropylen mit einem Schmelzindex von 35 g/- 10 Minuten erhalten wurde, wird wie in Beispiel 1 beschrieben zu einer 150 /um starken Folie verarbeitet. Das Polypropylen der Folie besitzt dann einen Schmelzindex von 1,6 g/10 min.

Beispiel 5:

Aus 85 Gew.% Polypropylen eines Schmelzindex von 0,3 g/10 min und 15 Gew.% eines Polyäthylens einer Dichte von 0,940 mit einem Schmelzindex von 8 g/10 min bei 190°C und 21,6 N wird unter Zusatz von 0,3 Gew.% BHT eine Mischung hergestellt, die einen Schmelzindex von 0,8 g/10 min (230°C/21,6 N) besitzt. Dieses Produkt wird wie in Beispiel 1 angegeben zu einer 100 /um dicken Folie verarbeitet. Der Schmelzindex des Gemisches in der Folie beträgt 1,6 g/10 min.

Beispiel 6:

Polypropylen mit einem Schmelzindex von 0,9 g/10 min (230°C/21,6N), welches 0,10 Gew.% Tetrakis-2,4-ditert.butylphenyl-4,4'-biphenylylen-diphospho- nit als Stabilisator enthält, wird auf einem aus 4, in der L-Form angeordneten Walzen bestehenden Kalander mit einer Arbeitsbreite von 2 m, zu einer Folie mit einer Dicke von 90 /um verarbeitet. Die Walzen weisen in Arbeitsrichtung gesehen an der Oberfläche gemessen folgende Temperaturen auf: 205/208/ 208/208°C. Die Voreilung der nächstfolgenden Walze beträgt jeweils 10 %. Der thermisch-oxidative Abbau während des Verarbeitungsprozesses bewirkt einen Ansteig des MFI von 0,9 auf 0,95 g/10 min.

Beispiel 7:

Ein Polypropylen mit einem Schmelzindex von 2,0 g/10 min, das 0,2 Gew.% von Tetrakis-2,4-ditert.butylphenyl-4,4'-biphenylylen-diphosphonit als Stabilisator enthält, wird wie in Beispiel 6 beschrieben zu 90 /um dicken Folien verarbeitet, wobei der Schmelzindex infolge des dabei auftretenden oxidativen Abbaus auf 2,2 g/10 min ansteigt.

Beispiel 8:

Ein Polypropylen mit einem Schmelzindex von 0,7 g/10 min, das mit 0,2 Gew.% Distearyl-pentaerithritol-diphosphit stabilisiert ist, wird an einem Laborkalander (3-Walzenstuhl in I-Form) zu einer Folie einer Stärke von 100 /um verarbeitet. Die Verarbeitungstemperaturen liegen dabei der Reihenfolge der Walzen nach bei 185/190/195°C. Die Voreilung der jeweils nächstfolgenden Walze beträgt 15 %. Der Schmelzindex der Folie beträgt 0,85 g/10 min.

Beispiel 9:

Dem im Beispiel 7 beschriebenen Polypropylen werden 2,0 Gew.% $TiO_2$ zugegeben und die Mischung unter den dort angegebenen Bedingungen zu einer 600 /um dicken Tiefziehfolie verarbeitet. Der Schmelzindex der Folie beträgt 2,3 g/10 min.

Patentansprüche:

1. Verfahren zur Herstellung von Folien oder Platten aus Polypropylen oder dessen Mischungen mit Polyäthylen durch Kalandrieren bei Temperaturen oberhalb des Kristallitschmelzpunktes und bei einer Voreilung jeder nachfolgenden Kalanderwalze von mindestens 1,1 : 1, dadurch gekennzeichnet, daß ein gegebenenfalls inerte Füllstoffe und/oder inerte Pigmente enthaltendes Polypropylen oder ein Gemisch desselben mit maximal 25 Gew.% Polyäthylen mit einem Schmelzindex im Bereich von 0,4 bis 2,0 g/10 min (230°C/21,6 N) eingesetzt wird, und für eine Stabilisierung des Polypropylens oder Polypropylen-Polyäthylen-Gemisches in solchem Maße gesorgt ist, daß während des Kalandrierverfahrens der Schmelzindex nicht über 2,4 g/10 min (230°C/21,6 N) ansteigt.

2. Verfahren nach Anspruch 1, dadurch gekennzeichnet, daß ein Polypropylen eingesetzt wird, bei dem der Schmelzindexbereich von 0,4 bis 2,0 g/10 min durch Mischen von 70 bis 95 Gew.% eines hochmolekularen Polypropylens eines Schmelzindex im Bereich von 0,2 bis 0,5 g/10 min (230°C/21,6 N) mit 5 bis 30 Gew.% eines niedermolekularen Polypropylens mit einem Schmelzindex von höher als 7 g/10 min (230°C/21,6 N) eingestellt wurde.

3. Verfahren nach Anspruch 1, dadurch gekennzeichnet, daß ein Gemisch aus Polypropylen und Polyäthylen eingesetzt wird, bei dem der Schmelzindexbereich von 0,4 bis 2,0 g/10 min durch Mischen von 75 bis 95 Gew.% eines hochmolekularen Polypropylens eines Schmelzindex im Bereich von 0,2 bis 0,5 g/10 min mit 5 bis 25 Gew.% eines Polyäthylens mit einem Schmelzindex von höher als 1,0 g/10 min (190°C/21,6 N) eingesellt wurde.

4. Verfahren nach den Ansprüchen 1 bis 3, dadurch gekennzeichnet, daß ein Polypropylen oder dessen Gemisch mit Polyäthylen eingesetzt wird, das mit einem Thermostabilisator versehen ist, der bei Aufheizen auf 250°C bei einer Aufheizgeschwindigkeit von 6°C/Minute in $N_2$-Atmosphäre maximal 5 Gew.% Abdampfverlust aufweist, wobei die Menge des Stabilisators so bemessen ist, daß während des Kalandrierverfahrens die Schmelzindexerhöhung maximal 20 % des Ausgangsschmelzindex beträgt.

5. Verfahren nach Anspruch 4, dadurch gekennzeichnet, daß der Stabilisator einen Abdampfverlust von 5 % bei einer Temperatur über 270°C besitzt.

6. Verfahren nach den Ansprüchen 1 bis 5, dadurch gekennzeichnet, daß das Polypropylen bzw. Polypropylen-Polyäthylengemisch 1 bis 3 Gew.% eines Pigmentes enthält.

7. Verfahren nach Anspruch 6, dadurch gekennzeichnet, daß als Pigment $TiO_2$ verwendet wird.

8. Verfahren nach den Ansprüchen 1 bis 7, dadurch gekennzeichnet, daß das als Ausgangsmaterial dienende Polypropylen oder das Polypropylen-Polyäthylengemisch Nukleationsmittel enthält.

9. Verfahren nach den Ansprüchen 1 bis 8, dadurch gekennzeichnet, daß die Folie oder Platte während des Kalandrierverfahrens durch eine gegenüber der Eingabegeschwindigkeit erhöhte Abzugsgeschwindigkeit von der letzten Kalanderwalze monoaxial verstreckt wird.

10. Verfahren nach den Ansprüchen 1 bis 9, dadurch gekennzeichnet, daß Folien einer Stärke von 40 um bis 1000 um hergestellt werden.

O.Z.681/692
10.2.1981

**Europäisches Patentamt**

## EUROPÄISCHER RECHERCHENBERICHT

EP 81 10 1692

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 731 479 (ICI)<br>* Seite 9, Zeilen 10-29; Seite 12, Zeilen 7-21; Seite 7, Zeilen 20-32 *<br>-- | 1,6,7, 10 | B 29 D   7/14<br>C 08 J   5/18//<br>C 08 L 23/12 |
| | KUNSTSTOFFE, 67 (1977)-3<br>München, DE<br>F. MITTERHOFER: "Verarbeitungs-Stabilisatoren für Polypropylen", Seiten 151-153<br>* Insgesamt *<br>-- | 1-10 | |
| | RESEARCH DISCLOSURE, Dezember 1978-176<br>Homewell-Havant, GB<br>T.J. HENMAN: "Stabilisation of polypropylene during processing"<br>Seite 36, Nr.17646<br>* Insgesamt *<br>-- | 1-10 | RECHERCHIERTE SACHGEBIETE (Int. Cl.³)<br><br>B 29 D   7/14<br>C 08 J   5/18<br>C 08 L 23/02<br>          23/10<br>          23/12 |
| | US - A - 3 076 783 (M.P. WEAVER)<br>* Insgesamt *<br>-- | 1-10 | |
| | US - A - 3 227 678 (M.P. WEAVER)<br>* Insgesamt *<br>-- | 1-10 | KATEGORIE DER GENANNTEN DOKUMENTE |
| A | DE - A - 2 732 567 (LENTIA)<br>* Ansprüche 1-3 *<br>--<br>./. | | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Berlin | 01-07-1981 | BRUCK |

EPA form 1503.1   06.78

Europäisches
Patentamt

**EUROPÄISCHER RECHERCHENBERICHT**

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| A | AT - A - 189 399 (OSTERREICHISCHE STICKSTOFFWERKE) <br> * Anspruch * <br> -- | | |
| DA | AT - A - 211 040 (FARBWERKE HOECHST) <br> * Ansprüche 1,4,5 * <br> ---- | | |
| | | | **RECHERCHIERTE SACHGEBIETE (Int. Cl. ³)** |